# EUROPEAN PATENT APPLICATION

(11) **EP 2 759 970 A1**
(43) Date of publication of application: **30.07.2014**
(21) Application number: 13152640.2
(22) Date of filing: 25.01.2013
(51) Int. Cl.: G06Q 20/04

(54) **Verifying the validity of an electronic ticket**

(71) Applicant: Bonwal OY, 00510 Helsinki (FI)
(72) Inventor: Laukkanen, Mikko, 02610 Espoo (FI); Jurvanen, Tuukka, 90520 Oulu (FI); Suikkanen, Jukka, 02320 Espoo (FI); Jernberg, Juha, 90550 Oulu (FI)
(74) Representative: Papula Oy

(57) **Abstract**

The invention relates to ticketing and verifying the validity of an electronic ticket. In a method for verifying a ticket suitable for being displayed by a mobile terminal, the ticket comprises information related to a subscriber identity; a ticket reader extracts the information related to the subscriber identity, and initiates a call to the subscription number, wherein the mobile terminal receiving the call is verified as being assigned to the ticket.

## Description

### FIELD OF THE INVENTION

The invention relates to information technology. More specifically, the invention relates to ticketing and verifying the validity of an electronic ticket.

### BACKGROUND OF THE INVENTION

An electronic ticket is a digital ticket that has replaced conventional paper tickets in many applications. Electronic tickets are used for example when travelling by bus or by train. The passenger may purchase the ticket by using a mobile phone or a computer. The ticket is delivered to the passenger electronically, for example via the Internet as an image file.

A major problem related to electronic ticketing is counterfeiting or copying. The validity of the ticket must be verified. Also in some cases the ownership of the ticket must be verified. Travel tickets have usually a limited validity period. For example, the electronic ticket may be purchased for the next hour or 24 hours, when the ticket is valid inside a certain zone.

In some solutions the ticket comprises a code that has its own validity period that may differ from the travelling period. One purpose for this is to ensure that the ticket is not copied. Otherwise other passengers could travel with the same ticket within the zone or in the same vehicle. This validity period may be shorter than the validity of the travel period, for example 5 to 10 minutes.

When the ticket inspector checks the validity of the ticket, several secret codes are checked. The ticket may comprise simple visual cues that the inspector may perceive without any devices, such as numbers in a specific place or order. For any short-lived codes such simple visual cues are not suitable as they could become too complex for the inspector.

Electronic means for the checking of the code include digital signatures, shared secrets or similar systems that are based on digital keys. In some systems the checking process requires a functional data connection between the ticket reader device and the backend system in order to check such short-lived codes. The data connection may be weak or intermittent when the vehicle enters different shadow zones, tunnels or alike. The inspector still needs a method to check the full validity of the ticket without a fully operating data connection.

### SUMMARY

The invention discloses a method for verifying a ticket suitable for being displayed by a mobile terminal, comprising displaying the ticket. According to one example the ticket is an electronic ticket. The mobile terminal is for example a mobile phone, a smart phone, a tablet computer or the like. The ticket comprises information related to a subscriber identity; a ticket reader extracts the information related to the subscriber identity, and initiates a call to the subscription number, wherein the mobile terminal receiving the call is verified as being assigned to the ticket. Information related to the subscriber identity is for example a telephone number, a MSISDN number or any other information that can be linked to the telephone number of the assumed ticket holder. In one embodiment the subscriber identity is not related to the telephone or telephone number. Instead, the subscriber refers to the ticket subscriber and the identity to the person subscribing the ticket. The information related to the subscriber identity is for example an application specific unique identifier. The unique identifier may be assigned to the application for example during the initial installation of the application in the smart phone. The call refers in this example to a push message that is delivered to the smart phone by the delivery mechanisms available in the application market places such as Apple App Store, Android Market, Google Play Store, Ovi Store or Windows Marketplace.

In one embodiment the method comprises encrypting the information related to the subscriber identity and decrypting the information by the ticket reader. Encrypting and decrypting may be executed by secret keys, by symmetrical shared secret or asymmetric keys with a public key infrastructure. In one embodiment the information is signed by a digital signing key and the ticket reader checks the signature.

In one embodiment the method comprises sending the ticket comprising the encrypted information related to the subscriber identity to the mobile terminal or to a device configured to print the ticket. In one embodiment the method comprises the ticket reader reading the ticket from visual information provided by the mobile terminal, from NFC communication provided by the mobile terminal or from a printed ticket. The information may be embedded in the visual information that is the printable portion of the electronic ticket and wherefrom the reader can adopt the information.

In one embodiment the visual information is a 2D barcode or a series of images. For example, the visual information may be a simple animation or a video clip and the information related to the subscription may be embedded in the animation or video.

In one embodiment the method comprises calling to the subscription number when a validity period of the ticket's visual information has expired.

The second aspect of the invention discloses a reader device for verifying a ticket suitable for being displayed by a mobile terminal, comprising means for reading the ticket. The reader comprises means for extracting information related to the subscriber identity from the ticket, and means for initiating a call to the subscription number, wherein the mobile terminal receiving the call is verified as being assigned to the ticket. Initiating a call comprises resolving the phone number and calling to the number. Initiating may also comprise configuring the reader for a mode where it is ready to call to the number, for example displaying the phone number and indicating to the inspector means for calling such as a green button or indicator on the touch screen or the like that completes the calling procedure after the inspector has interactively used the means for calling.

In one embodiment the device comprises means for decrypting the information related to the subscriber identity. In one embodiment the device comprises means for reading the ticket from visual information provided by the mobile terminal, from NFC communication provided by the mobile terminal or from a printed ticket.

The third aspect of the invention discloses a computer program product for verifying a ticket suitable for being displayed by a mobile terminal comprising a computer-readable medium bearing computer program code embodied therein for use with a computer. According to the invention the computer program code comprises code for receiving the ticket comprising information related to a subscriber identity, code for extracting the information related to the subscriber identity from the receiving, code for initiating a call to the subscription number when a validity period of the ticket's visual information has expired.

In one embodiment the computer program product comprises code for decrypting the information related to the subscriber identity. In one embodiment the computer program product comprises code for reading the ticket from visual information provided by the mobile terminal, from NFC communication provided by the mobile terminal or from a printed ticket.

The fourth aspect of the invention discloses an electronic ticket suitable for being displayed by a mobile terminal, comprising encrypted information related to the subscriber identity. Information related to the subscriber identity is for example a telephone number, a MSISDN number or any other information that can be linked to the telephone number of the assumed ticket holder.

The present invention enables the ticket inspector to check the validity of the ticket without a mobile data connection. In many operating areas a phone call succeeds although the data connection might fail.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:

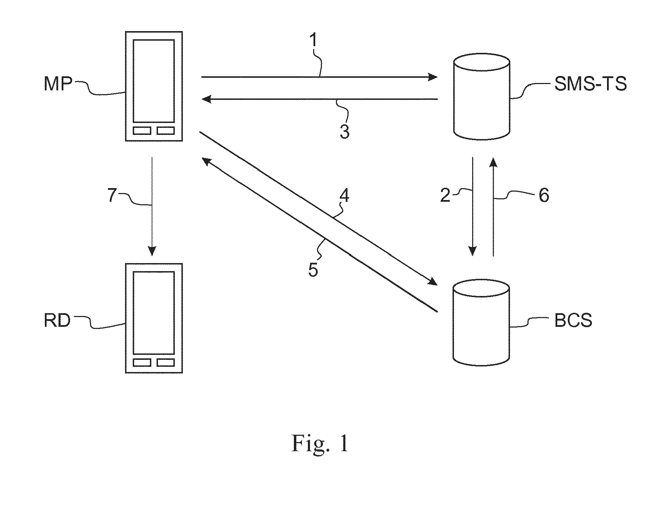

**Fig. 1** is a block diagram illustrating the elements according to the invention.

### DETAILED DESCRIPTION OF THE INVENTION

Reference will now be made in detail to the embodiments of the present invention, examples of which are illustrated in the accompanying drawings.

Figure 1 illustrates the elements of one exemplary embodiment of the present invention and one exemplary flow for purchasing a ticket with a mobile phone. A passenger orders a travel ticket by using a mobile phone MP. The order process is started for example by sending a predefined SMS message to a predefined number (SMS, Short Message System), arrow 1. An SMS ticketing service SMS-TS is implemented in a general purpose computer, for example in a cloud computing environment. The SMS ticketing service SMS-TS may be connected to a mobile operator's SMS gateway, a telecommunications network element for sending or receiving SMS transmissions to or from a telecommunications network. The SMS gateways may support media conversion from email and other formats.

The SMS ticketing service SMS-TS sends a request, arrow 2, to create an electronic ticket to a 2D barcode creation service BCS, which is implemented in a general purpose computer, for example in a cloud computing environment. The SMS ticketing service SMS-TS also sends a return message to the passenger, arrow 3, and creates a charging bill for the service. The return message sent to the passenger's mobile phone MP generates a ticket query to the 2D barcode creation service BCS by a mobile data connection, arrow 4. The ticket query may be executed by a dedicated application or by a browser. The 2D barcode creation service BCS returns the ticket comprising a 2D barcode to the passenger's mobile phone MP, arrow 5. The ticket has been signed by the 2D barcode creation service BCS with a digital signing key. The 2D barcode creation service BCS sends a report of the transaction to the SMS ticketing service SMS-TS for billing purposes. The data is transferred via an SSL-encrypted connection between the 2D barcode creation service BCS and the SMS ticketing service SMS-TS; and between the 2D barcode creation service BCS and the passenger's mobile phone MP. The data between the passenger MP and the SMS ticketing service SMS-TS is transferred via SMS messaging.

The sent ticket comprises a validity period assigned to the ticket itself. Although the ticket might enable traveling for 24 hours, the ticket itself may be valid for a short time period, for example only 5 or 10 minutes. Other information in the ticket comprises one or more checking codes, a time stamp indicating the creation time of the ticket, a phone number of the passenger and a signature. This information is incorporated into the 2D barcode. The electronic ticket may also comprise a series of images. Examples of the series of images are an animation or a video clip. The electronic ticket also comprises encrypted information related to the subscriber identity: a phone number or information related to the phone number.

The ticket inspector checks the validity of the ticket with a reader device that is configured to read the 2D barcode. The reader device verifies the validity of the 2D code. If the validity of the 2D code has expired, but the travel ticket itself is still valid, the passenger will be requested to download a new copy of the ticket with a valid 2D code.

If the mobile data network is not available, the telephone network may still be available. In these situations the validity is verified by calling to the mobile phone.

The reader device may be a mobile phone, a smart phone or a dedicated device purposed for checking tickets. The reader device comprises means for reading the 2D barcode or any other visual image that is presented on the screen of the passenger's mobile phone. The reading means may comprise a camera, a CCD, imaging technology or a laser. The reader device may also be an application implemented in a smartphone or in a mobile phone. The visual information may also be received from NFC (Near Field Communication) communication provided by the mobile terminal or from a printed ticket.

The reader device comprises at least one processor and at least one memory including computer program code, the at least one memory and the computer program code arranged, with the at least one processor, to cause the apparatus at least to perform: extracting information related to the subscriber identity from the ticket, and initiating a call to the subscription number, wherein the mobile terminal receiving the call is verified as being assigned to the ticket. Initiating the call refers to resolving the phone number and indicating the inspector or the user of the reader device to start the call. Initiating the call may also refer to the reader device transmitting the passenger's phone number to another device such as a mobile phone for executing the call. The reader device may or may not comprise phone functionalities. In one exemplary embodiment the reader device sends the phone number information for example via Bluetooth or NFC communication to a mobile phone. Bluetooth or NFC functionalities are among the optional features on the mobile phone.

The reader device comprises means for decrypting the information related to the subscriber identity, for example utilizing software keys that may be either symmetric or asymmetric and a corresponding software module residing on the reader device.

In one exemplary embodiment the invention is utilized with the mobile data connection. In this alternative, the passenger may be using a tablet computer, a laptop or a similar device lacking mobile phone functionalities. The information related to the subscriber identity is an application specific identity code, assigned to the application for example during the initial installation of the application in the smart phone.

When the passenger installs the application or starts using it, a unique identifier that is related to the subscriber identity is assigned to the application. The identifier may be generated by the application itself or by a separate network entity such as the barcode creation service BCS. If the application generates the identifier, the identifier is relayed to the barcode creation service BCS. As the passenger purchases the ticket, the unique identifier is coded into the ticket information by the barcode creation service BCS.

When the ticket inspector checks the validity of the ticket, the unique identifier is read from the ticket. The reader device will start a call to the barcode creation service BCS or to the passenger's mobile phone if the mobile phone number is available in the ticket information. In some embodiments the ticket may be delivered to another device than the mobile phone or it may be printed on paper. For that purpose it is useful to verify the ownership of the ticket by ownership of the mobile phone.

Alternatively the reader device starts a call or at least a connection to the passenger's device via mobile data connection. The connection is preferably routed via the barcode creation service BCS that has access to detailed information of the passenger's mobile device. The reader device sends for example a short verification code to the passenger's mobile device that can be visually read from the ticket inspector's reader device and the passenger's mobile device. In one embodiment the verification code is sent as an SMS message.

One example of creating the unique identifier proceeds as follows: During the installation phase the application registers to the operating system of the mobile device as a recipient of push messages. The operating system may start a dialog with the user confirming that the push messaging will be enabled. After this step a server, for example APNS server, sends a device token to the application. This device token corresponds to the unique identifier.

The application sends the device token to the barcode creation service BCS where it is available to be coded into the ticket information and to find the correct application during the verification stage. The push messaging may be used for verification, wherein a phone call is replaced by the push message. The push message is sent from the barcode creation service to the APSN server that relays the push message to the passenger's mobile device.

Embodiments of the present invention may be implemented in software, hardware, application logic or a combination of software, hardware and application logic. In an example embodiment, the application logic, software or instruction set is maintained on any one of various conventional computer-readable media. In the context of this document, a "computer-readable medium" may be any media or means that can contain, store, communicate, propagate or transport the instructions for use by or in connection with an instruction execution system, system, or device, such as a computer. A computer-readable medium may comprise a computer-readable storage medium that may be any media or means that can contain or store the instructions for use by or in connection with an instruction execution system, system, or device, such as a computer. The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

If desired, the different functions discussed herein may be performed in a different order and/or concurrently with each other.

Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for verifying a ticket suitable for being displayed by a mobile terminal, comprising displaying the ticket, **characterized by**:
the ticket comprising information related to a subscriber identity,
a ticket reader extracting the information related to the subscriber identity, and
initiating a call to the subscription number, wherein the mobile terminal receiving the call is verified as being assigned to the ticket.

2. The method according to claim 1, **characterized by** encrypting the information related to the subscriber identity and decrypting the information by the ticket reader.

3. The method according to claim 1, **characterized by** sending the ticket comprising the information related to the subscriber identity to the mobile terminal or to a device configured to print the ticket.

4. The method according to claim 1, **characterized by** the ticket reader reading the ticket from visual information provided by the mobile terminal, from NFC communication provided by the mobile terminal or from a printed ticket.

5. The method according to claim 4, **characterized by** the visual information being a 2D barcode or a series of images.

6. The method according to claim 1, **characterized by** calling to the subscription number when a validity period of the ticket's visual information has expired.

7. A reader device for verifying a ticket suitable for being displayed by a mobile terminal, comprising means for reading the ticket, **characterized by** the reader comprising:
means for extracting information related to the subscriber identity from the ticket, and
means for initiating a call to the subscription number, wherein the mobile terminal receiving the call is verified as being assigned to the ticket.

8. The device according to claim 7, **characterized by** comprising means for decrypting the information related to the subscriber identity.

9. The device according to claim 7, **characterized by** comprising means for reading the ticket from visual information provided by the mobile terminal, from NFC communication provided by the mobile terminal or from a printed ticket.

10. The method according to claim 9, **characterized by** the visual information being a 2D barcode or a series of images.

11. A computer program product for verifying a ticket suitable for being displayed by a mobile terminal comprising a computer-readable medium bearing computer program code embodied therein for use with a computer, the computer program code comprising:
code for receiving the ticket comprising information related to a subscriber identity,
code for extracting the information related to the subscriber identity from the receiving,
code for initiating a call to the subscription number when a validity period of the ticket's visual information has expired.

12. The computer program product according to claim 11, **characterized by** code for decrypting the information related to the subscriber identity.

13. The computer program product according to claim 11, **characterized by** code for reading the ticket from visual information provided by the mobile terminal, from NFC communication provided by the mobile terminal or from a printed ticket.

14. The computer program product according to claim 13, **characterized by** the visual information being a 2D barcode or a series of images.

15. An electronic ticket suitable for being displayed by a mobile terminal, comprising visual information such as a 2D barcode or a series of images, **characterized in that** the ticket comprises encrypted information related to the subscriber identity.

## Amended claims

### Amended claims in accordance with Rule 137(2) EPC.

**1.** A method for verifying a ticket suitable for being displayed by a mobile terminal, comprising displaying the ticket, **characterized by**:
the ticket comprising information related to a subscriber identity,
a ticket reader extracting the information related to the subscriber identity, and
initiating a call to the subscription number, wherein the mobile terminal receiving the call is verified as being assigned to the ticket.

**2.** The method according to claim 1, **characterized by** encrypting the information related to the subscriber identity and decrypting the information by the ticket reader.

**3.** The method according to claim 1, **characterized by** sending the ticket comprising the information related to the subscriber identity to the mobile terminal or to a device configured to print the ticket.

**4.** The method according to claim 1, **characterized by** the ticket reader reading the ticket from visual information provided by the mobile terminal, from NFC communication provided by the mobile terminal or from a printed ticket.

**5.** The method according to claim 4, **characterized by** the visual information being a 2D barcode or a series of images.

**6.** The method according to claim 1, **characterized by** calling to the subscription number when a validity period of the ticket's visual information has expired.

**7.** A reader device for verifying a ticket suitable for being displayed by a mobile terminal, comprising means for reading the ticket, **characterized by** the reader comprising:
means for extracting information related to the subscriber identity from the ticket, and
means for initiating a call to the subscription number, wherein the mobile terminal receiving the call is verified as being assigned to the ticket.

**8.** The device according to claim 7, **characterized by** comprising means for decrypting the information related to the subscriber identity.

**9.** The device according to claim 7, **characterized by** comprising means for reading the ticket from visual information provided by the mobile terminal, from NFC communication provided by the mobile terminal or from a printed ticket.

**10.** The method according to claim 9, **characterized by** the visual information being a 2D barcode or a series of images.

**11.** A computer program product for verifying a ticket suitable for being displayed by a mobile terminal comprising a computer-readable medium bearing computer program code embodied therein for use with a computer, the computer program code comprising:
code for receiving the ticket comprising information related to a subscriber identity,
code for extracting the information related to the subscriber identity from the receiving,
code for initiating a call to the subscription number when a validity period of the ticket's visual information has expired.

**12.** The computer program product according to claim 11, **characterized by** code for decrypting the information related to the subscriber identity.

**13.** The computer program product according to claim 11, **characterized by** code for reading the ticket from visual information provided by the mobile terminal, from NFC communication provided by the mobile terminal or from a printed ticket.

**14.** The computer program product according to claim 13, **characterized by** the visual information being a 2D barcode or a series of images.
